# EUROPÄISCHE PATENTANMELDUNG

(11) **EP 1 745 832 A1**
(43) Veröffentlichungstag der Anmeldung: **24.01.2007**
(21) Anmeldenummer: 06014083.7
(22) Anmeldetag: 06.07.2006
(51) Int. Cl.: B01D 21/00, B01D 17/02, C02F 1/00

(54) **Lamellenabscheider**

(30) Priorität: 19.07.2005 DE 102005033701
(71) Anmelder: LINDE-KCA-Dresden GmbH, 01277 Dresden (DE)
(72) Erfinder: Greulich, Franz, 04425 Taucha (DE); Pankow, Steffen, Dr., 01219 Dresden (DE)

(57) **Zusammenfassung**

Die Erfindung betrifft einen Plattenabscheider zur Abtrennung sedimentierbarer Inhaltsstoffe aus Flüssigkeiten, insbesondere zur Schlammabtrennung aus Abwasser. Der Plattenabscheider weist Plattenpakete (2) aus parallel gestapelten Einzelplatten auf. Jeweils zwei Platten mit rhombischer Grundform bilden ein Paar. Beide Platten sind unter Bildung einer ebenfalls geneigten, zum Abzug der sedimentierten Inhaltsstoffe dienenden Mittelrinne gegeneinander geneigt. Die Plattenpakete (2) können in einen zylindrischen Behälter (1) eingebaut sein, der einen gasdichten Betrieb ermöglicht. Damit eignet sich der Plattenabscheider insbesondere als Trennstufe für Hochlast-Anaerobprozesse. Einem Bioreaktor nachgeschaltet kann hier das gereinigte Abwasser von der rückzuführenden Biomasse getrennt werden, während das Biogas über Kopf abgeführt wird.

## Beschreibung

Die Erfindung betrifft einen Plattenabscheider zur Abtrennung sedimentierbarer Inhaltsstoffe aus Flüssigkeiten, wobei der Plattenabscheider mindestens ein Plattenpaket aus parallel gestapelten Einzelplatten aufweist.

Plattenabscheider in den verschiedensten Bauweisen sind seit Jahrzehnten angewendete Apparate, die zur Abtrennung sedimentierbarer und zum Teil auch flotierbarer Inhaltsstoffe in vorwiegend wässrigen Lösungen dienen. In der Wasser- und Abwasserbehandlung gehören Plattenabscheider daher zu den Standardausrüstungen im Aufbereitungsprozess. Dabei existieren eine Reihe von Ausführungsvarianten, die sich in Material, Form und Befestigung der Platten oder Plattenpakete unterscheiden. Weit verbreitet sind insbesondere Lamellenpakete aus profilierten Einzelelementen. Weitere Ausführungsformen betreffen Lamellenpakete mit spezieller Einlaufgestaltung oder Kombinationen mit speziellen Räumsystemen.

Aus dem deutschen Gebrauchsmuster 93 98 28 7.7 ist beispielsweise ein Lamellenklärer mit beweglichen Platten bekannt.

Die DE 38 24 295 C2 betrifft einen horizontal durchströmten Lamellenklärer mit gewellten Platten.

In der EP 100 43 39 B1 ist eine Klärvorrichtung mit senkrecht übereinander angeordneten Kegelstümpfen beschrieben.

Weiterhin ist aus der EP 0 973 595 B1 ein modularer Lamellenklärer bekannt, der ein Schlamm-Silo mit Einbauten aufweist.

Diese bekannten Systeme zeichnen sich dadurch aus, dass das zu behandelnde Flüssigkeitsgemisch möglichst gleichmäßig unter dem Abscheidemodul verteilt wird, um ein optimales Durchströmen der Platten bzw. Röhren zu gewährleisten. Da der Klarwasserspiegel über dem Lamellenpaket waagerecht ist und sich auch die Oberfläche des sich einstellenden Schlammbettes unter den Lamellen waagerecht einstellt, sind die Lamellenpakete in aller Regel ebenso vorwiegend waagerecht angeordnet. Dies bedeutet, dass Ober- und Unterkante der Einzellamellen in waagerechter Linie ausgerichtet sind.

Die derzeit übliche Anordnung der Lamellen mit Ein- und Ausströmöffnung in annähernd gleicher Höhe bedingt einen relativ großen Flächenbedarf der Klärer. Die Durchsatzleistung kann proportional zum Flächenbedarf angesehen werden. Mit der flächenmäßigen Ausdehnung steigen jedoch auch die Aufwendungen für die Entnahme des sedimentierten Schlammes unterhalb der Lamellen. Bei Konstruktionen ohne Räumeinrichtung erfordert die Konuskonstruktion (ca. 60 Grad) eine große Bauhöhe. Auch Zwangsräumeinrichtungen (z.B. Krählwerke) werden mit entsprechender Vergrößerung der zu beräumenden Fläche sehr aufwendig. Mit dem Flächenbedarf für die eigentliche Klärerkonstruktion gehen oftmals Sekundäraufwendungen für eine notwendige Bauhülle einher.

Darüber hinaus sind bisherige Plattenabscheider für spezielle biologische Verfahren nicht immer geeignet. Aufgrund ihrer Konstruktionsprinzipien sind Standardklärer ohne aufwendige Nachrüstung für den Einsatz unter hermetischem Abschluss von Atmosphäre bzw. bei Einsatz unter erhöhtem Druck nicht geeignet. Ein gasdichter Betrieb im Zusammenhang mit Hochlast-Anaerobprozessen ist daher mit herkömmlichen Plattenabscheidern nur mit sehr aufwendigen Anpassungen möglich.

Der vorliegenden Erfindung liegt die Aufgabe zugrunde, einen Plattenabscheider der eingangs genannten Art so auszugestalten, dass auch bei kompakter Ausführung des Plattenabscheiders eine effiziente Abscheidung der sedimentierbaren Inhaltsstoffe ermöglicht wird.

Diese Aufgabe wird erfindungsgemäß dadurch gelöst, dass innerhalb einer vertikal ausgerichteten Gesamtkonstruktion jeweils zwei Platten mit rhombischer Grundform ein Paar bilden, wobei beide Platten unter Bildung einer ebenfalls geneigten, zum Abzug der sedimentierten Inhaltsstoffe dienenden Mittelrinne gegeneinander geneigt sind.

Die Platten arbeiten dabei nach der Funktion eines Kreuzstromabscheiders. Die Flüssigkeit strömt z.B. über eine Ecke in die Plattenzwischenräume ein. Durch geeignete Wahl der Plattenform, die resultierenden Druckverluste auf dem Fließweg und die sich daraus ergebenden hydraulischen Verhältnisse kann eine gleichmäßige Durchströmung der Platten erreicht werden.

Vorzugsweise ist die Falllinie der Platten derart schräg zur Fließrichtung der zu klärenden Flüssigkeit gewählt, dass die sedimentierten Inhaltsstoffe quer zur Hauptfließrichtung der Flüssigkeit abgeschieden werden. Die sedimentierten Inhaltsstoffe, die ohne Beschränkung auf bestimmte Stoffeigenschaften allgemein als Schlamm bezeichnet werden, werden im Mittelteil gesammelt und unter Vermeidung eines erneuten Kontaktes mit dem zufließenden Flüssigkeitsstrom in einen Sammelraum für die sedimentierten Feststoffe (Schlammsammelraum) transportiert. Hierzu endet die nach unten geneigte Mittelrinne der Platten oberhalb des Sammelraumes für die sedimentierten Feststoffe. Diese kontaktfreie Strömungsführung stellt einen erheblichen Vorteil des erfindungsgemäßen Plattenabscheiders gegenüber herkömmlichen Lösungen dar.

Die Effizienz eines Plattenabscheiders wird insbesondere durch eine möglichst gleichmäßige Verteilung des zufließenden Flüssigkeitsgemisches auf die gesamte Klärfläche sowie einen gleichmäßig flächigen Abzug des feststofffreien Klarwassers bestimmt. Bei horizontal angeordneten Plattenpaketen spielt dabei nicht zuletzt die dichte Verteilung unterhalb des Plattenpaketes eine wesentliche Rolle, da der sedimentierte Schlamm des zufließenden Flüssigkeitsgemisches kreuzen muss. Bedingt durch diese Tatsache wird die Gleichverteilung üblicherweise durch eine entsprechend große Zulaufzone unter dem Plattenpaket erreicht.

Eine besonders bevorzugte Ausgestaltung der Erfindung sieht nun vor, dass die Verteilung über einen speziell gestalteten vertikalen Einlaufschlitz erfolgt. Hierzu sind seitlich zu dem Plattenpaket angeordnete Begrenzungsflächen vorgesehen, wobei mindestens einer Begrenzungsfläche ein vertikaler Einlaufschlitz zur Verteilung der Flüssigkeit auf die Platten zugeordnet ist. Der Einlaufschlitz kann in Größe und Form (gerade, schräg zulaufend, gezahnt) dem jeweiligen zu behandelnden Medium angepasst werden. Bei Bedarf ist auch eine Nachjustierung unter Betriebsbedingungen möglich.

Zweckmäßigerweise ist das Plattenpaket in einem zylindrischen Behälter mit vorzugsweise konischem Boden eingebaut. Der Behälter kann beispielsweise die Grundform eines Standardsilos aufweisen. In dem zylindrischen Behälter sind bevorzugt jeweils zwei Plattenpakete derart angeordnet, dass sich im Mittelteil ein Abzugsraum für geklärte Flüssigkeit ergibt. Die Seiten der Plattenpakete sind beispielsweise durch seitliche Abschlussplatten geschlossen. In der Draufsicht ergibt sich somit ein Kreis mit eingeschlossenem Quadrat. Der Abzugsraum für geklärte Flüssigkeit stellt sich als Rechteck dar. Der Zulauf des zu klärenden Flüssigkeitsgemisches ist vorzugsweise von außen über jene Seiten vorgesehen, wo die Plattenpakete geschlossen sind. Die Verteilung auf die einzelnen Platten erfolgt nun über den Einlaufschlitz, wobei durch den hier auftretenden einstellbaren Druckverlust eine Gleichverteilung garantiert wird.

Zulauf des zu klärenden Flüssigkeitsgemisches und Ablauf der geklärten Flüssigkeit werden dabei vorzugsweise entgegengesetzt angeordnet. In der einen Variante ist ein im unteren Bereich des Abzugsraumes beginnendes Abzugsrohr zum Abzug der geklärten Flüssigkeit aus dem Behälter herausgeführt, während im oberen Bereich des Behälters ein Zulauf für zu klärende Flüssigkeit zu einer im Außenbereich des Plattenpakets angeordneten Verteilzone vorgesehen ist.

Gemäß einer anderen Variante ist ein im oberen Bereich des Abzugsraumes beginnendes Abzugsrohr zum Abzug der geklärten Flüssigkeit aus dem Behälter herausgeführt, während im unteren Bereich des Behälters ein Zulauf für zu klärende Flüssigkeit zu einer im Außenbereich des Plattenpakets angeordneten Verteilzone vorgesehen ist.

Die abgeschiedenen sedimentierten Inhaltsstoffe, die auch als Schlamm bezeichnet werden, werden über die Mittelrinne des jeweiligen Plattenpakets zum Sammelraum für sedimentierte Feststoffe geleitet und sinken dort zum Boden ab. Der Schlamm wird am Boden, der bevorzugt konusförmig ausgebildet ist, gesammelt und kann von dort entnommen bzw. in einen weiterführenden Behandlungsprozess zurückgeführt werden.

Die Erfindung weist eine ganze Reihe von Vorteilen auf, die folgenden Problemkreisen zugeordnet werden können:
1. Abscheideffekt:
   Der erfindungsgemäße Plattenabscheider zeichnet sich gegenüber herkömmlichen Plattenabscheidem durch eine veränderte Strömungsführung aus, wobei der sedimentierte Anteil nicht den Zulaufstrom passieren muss. Gleichzeitig können durch dynamische Effekte besonders schwere, große und damit gut sedimentierbare Bestandteile abgeschieden werden, bevor sie das Lamellenpaket passieren.
2. Platzbedarf:
   Durch die Anordnung der Lamellen übereinander ergibt sich ein wesentlich verringerter Raumbedarf. Dies bezieht sich zum einen auf den Gesamtkörper, der durch den relativ kleineren Schlammsammelraum in Relation zur verfügbaren Plattenfläche kleiner ausgeführt werden kann als ein konventioneller Plattenabscheider. Darüber hinaus ist die erforderliche Grundfläche wesentlich kleiner als bei konventioneller Bauweise.
3. Aufstellungsort:
   Die gewählte Zylinderform des Behälters gestattet - z.B. in isolierter Form - eine Außenaufstellung. Auf ein entsprechendes Gebäude kann unter Umständen verzichtet werden. Die Außenaufstellung würde dabei gestatten, zu Wartungszwecken mit mobilem Gerät relativ einfach das Plattenpaket herauszuheben bzw. zu wechseln.
4. Materialbedarf:
   Aufgrund der zylindrischen Behälterhülle ergeben sich wesentlich günstigere statische Verhältnisse gegenüber der üblichen Quaderform. Dadurch ist auch der Einsatz unter Bedingungen mit erhöhtem Systemdruck möglich. Dies ist insbesondere dort von Bedeutung, wo eine Druckreduktion/Entspannung der Flüssigkeit zu unerwünschten Stoffumwandlungen, in der Folge verbunden mit Ausfällreaktionen auf den Platten führen kann.
5. Hermetische Ausführung:
   Die gewählte Form gestattet auf einfache Weise eine gas- bzw. druckdichte Ausführung, so dass der Klärer auch zur Behandlung von Dreiphasengemischen eingesetzt werden kann. Der Kopfteil kann dabei als Gaskuppel gestaltet werden.

Ein bevorzugtes Anwendungsgebiet der Erfindung ist die Nutzung als Abscheidemodul eines Hochleistungs-Anaerobreaktors. Als Reaktionsraum dient dabei z.B SchlaufenReaktor beliebiger Größe und Bauform. Das Abwasser-/Schlamm- bzw. Abwasser/Pelettgemisch wird anschließend über das Abscheidemodul geleitet, welches dem Hauptreaktor aufgesetzt bzw. beigestellt ist. Dabei erweist es sich als besonders vorteilhaft, dass die Erfindung einen gasdichten Betrieb erlaubt. Die abgetrennten Schlammflocken bzw. Peletts sinken direkt im Außenteil bzw. im Lamellenteil ab und werden über den Schlammsammelraum in den Hauptreaktor rückgeführt.

Prinzipiell lässt sich durch Anpassung der Strömungsverhältnisse die Erfindung auch zur Flotation einsetzen.

Im Folgenden soll die Erfindung anhand von in den Figuren schematisch dargestellten Ausführungsbeispielen näher erläutert werden:

Es zeigen
- Figur 1: Eine Prinzipskizze eines Plattenseparators mit Abwasserzuläufen im unteren Bereich und einem Klarwasserablauf im oberen Bereich
- Figur 2: Eine Prinzipskizze eines Plattenseparators mit Abwasserzuläufen im oberen Bereich und einem Klarwasserablauf im unteren Bereich
- Figur 3: Eine Prinzipskizze eines Plattenseparators in der Draufsicht
- Figur 4: Einen Plattenseparator in der Seitenansicht
- Figur 5: Einen Plattenseparator in der Vorderansicht
- Figur 6: Eine isometrische Darstellung eines Plattenseparators
- Figur 7: Einen Plattenseparator in der Draufsicht

Die Ausführungsbeispiele betreffen Plattenseparatoren, die insbesondere als Abscheidemodul eines Hochleistungs-Bioreaktors eingesetzt werden. Das Abwasser-/Schlammgemisch aus einem Hochleistungs-Anaerobreaktor wird zur Abtrennung des Schlamms durch den Plattenseparator geleitet. Der abgetrennte Schlamm kann in den Hochleistungs-Anaerobreaktor zurückgeführt werden, während gereinigtes Klarwasser abgezogen werden kann.

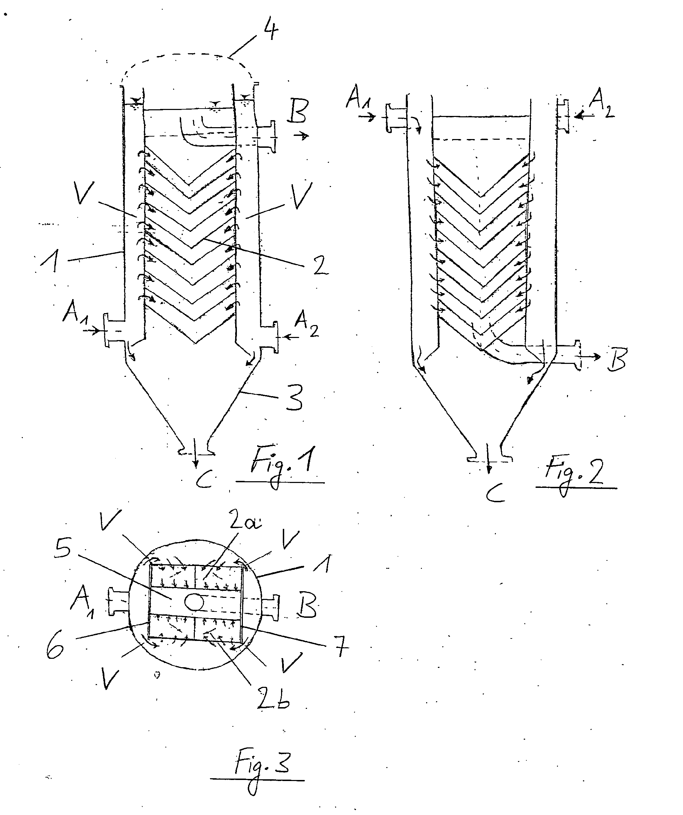

Gemäß der in Figur 1 gezeigten Prinzipskizze wird das Abwasser-/Schlammgemisch über Zuführungen A1 und A2 im unteren Bereich des Plattenseparators in den zylindrischen Behälter 1 eingeleitet. Über Verteilschlitze V strömt das Abwasser-/Schlammgemisch in das Lamellenpaket 2, das aus Einzelplatten mit jeweils rhombischer Grundform besteht. Dabei bilden jeweils zwei Platten ein Paar, wobei beide Platten gegeneinander geneigt sind. Die sich bildende, ebenfalls geneigte Mittelrinne dient zum Schlammabzug. Der abgesetzte Schlamm sinkt in den konisch ausgebildeten Schlammsammelraum 3 und kann über einen Abzug C aus dem Plattenseparator abgeführt werden. Der Schlamm kann beispielsweise zu einem Anaerobreaktor zurückgeführt werden. Das vom Schlamm befreite Klarwasser wird im oberen Bereich des Plattenseparators über eine Ablaufleitung b aus dem Plattenseparator herausgeführt. Optional befindet sich am Kopf des Plattenseparators noch ein Gasdom 4 zum Auffangen von entstehenden Gasen.

In Figur 2 ist eine Variante eines Plattenseparators dargestellt, die sich von der in Figur 1 gezeigten Variante dadurch unterscheidet, dass die Zuläufe für das Abwasser-/Schlammgemisch A1 und A2 im oberen Bereich des Plattenseparators angeordnet sind, während der Klarwasserablauf B im unteren Bereich des Plattenseparators vorgesehen ist.

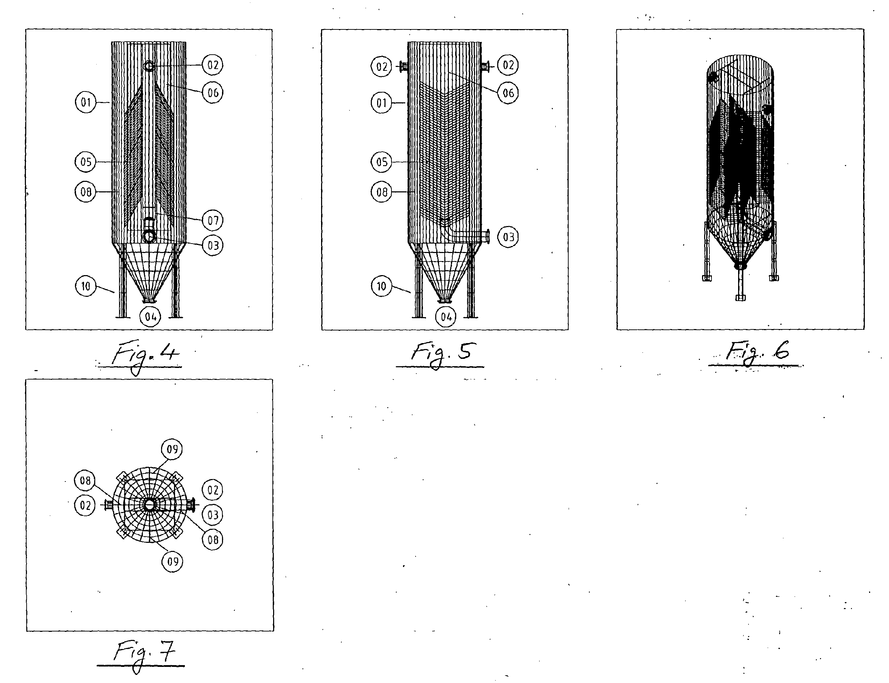

In Figur 3 ist eine Draufsicht des in Figur 1 dargestellten Plattenseparators gezeigt. Im zylindrischen Behälter 1 sind zwei Lamellenpakete 2a und 2b so angeordnet, dass sich im Mittelteil ein Abzugsraum 5 für die Klarwasserabzugsleitung B ergibt. Die Seiten der Lamellenpakete 2a und 2b sind durch Seitenplatten 6 und 7 geschlossen. In der Draufsicht ergibt sich somit ein Kreis mit eingeschlossenem Quadrat. Der Abzugsraum 5 für den Klarwasserabzug im Mittelteil stellt sich als Rechteck dar. Der Zulauf des zu trennenden Abwasser-/Schlammgemisches erfolgt von außen über jene Seiten, wo die Lamellenpakete 2a und 2b geschlossen sind. Von den Zuläufen A1 und A2 ist in der Draufsicht lediglich der Zulauf A1 zu erkennen. Die Verteilung des Abwasser-/Schlammgemisches auf die Lamellen erfolgt nun über die Verteilschlitze V an den Ecken der Lamellenpakete 2a und 2b. Durch den hier auftretenden einstellbaren Druckverlust wird eine Gleichverteilung des Abwasser-/Schlammgemisches auf die einzelnen Lamellen garantiert.

Die Figuren 4 bis 7 zeigen den Plattenseparator aus verschiedenen Perspektiven. In diesen Figuren sind dieselben Apparateteile mit denselben Bezugsziffem bezeichnet. In einem zylindrischen Grundkörper 1, der die Form eines Silos aufweist, sind Plattenpakete 5 angeordnet, die aus Einzelplatten mit jeweils rhombischer Grundform bestehen. Wie aus den verschiedenen Perspektiven der Figuren deutlich wird, bilden jeweils zwei Platten ein Paar, wobei beide Platten gegeneinander geneigt sind. Es ergibt sich eine Mittelrinne, die ebenfalls geneigt ist. Im oberen Bereich des Plattenseparators sind Zuläufe 2 für das Abwasser-/Schlammgemisch angeordnet. Der Klarwasserabzug 3 befindet sich bei dem in den Figuren 4 bis 7 dargestellten Ausführungsbeispiel im unteren Bereich des Plattenseparators. Am unteren Ende des konisch zulaufenden Bodenbereichs, der als Schlammsammelraum dient, ist ein Schlammabzug 4 vorgesehen. Die Lamellenpakete 5 sind seitlich durch seitliche Abschlussplatten 6 geschlossen. Im Zwischenraum zwischen den Lamellenpaketen 5 und dem Behältermantel befindet sich eine Verteilzone 8 für das Abwasser-/Schlammgemisch. Der gesamte Apparat steht auf Behälterfüßen 10. Sonstige Hilfskonstruktionen wie Aufstieg, Geländereinigungseinrichtungen etc. sind in den Figuren nicht dargestellt.

## Patentansprüche

1. Plattenabscheider zur Abtrennung sedimentierbarer Inhaltsstoffe aus Flüssigkeiten, wobei der Plattenabscheider mindestens ein Plattenpaket (2) aus parallel gestapelten Einzelplatten aufweist, **dadurch gekennzeichnet, dass** innerhalb einer vertikal ausgerichteten Gesamtkonstruktion jeweils zwei Platten mit rhombischer Grundform ein Paar bilden, wobei beide Platten unter Bildung einer ebenfalls geneigten, zum Abzug der sedimentierten Inhaltsstoffe dienenden Mittelrinne gegeneinander geneigt sind.

2. Plattenabscheider nach Anspruch 1, **dadurch gekennzeichnet, dass** die Falllinie der Platten derart schräg zur Fliessrichtung der zu klärenden Flüssigkeit gewählt ist, dass die sedimentierten Inhaltsstoffe quer zur Hauptfließrichtung der Flüssigkeit abgeschieden werden.

3. Plattenabscheider nach Anspruch 1 oder 2, **dadurch gekennzeichnet, dass** die nach unten geneigte Mittelrinne der Platten oberhalb eines Sammelraumes (3) für die sedimentierten Feststoffe endet.

4. Plattenabscheider nach einem der Ansprüche 1 bis 3, **dadurch gekennzeichnet, dass** seitlich zu dem Plattenpaket angeordnete Begrenzungsflächen (6) vorgesehen sind, wobei mindestens einer Begrenzungsfläche (6) ein vertikaler Einlaufschlitz (V) zur Verteilung der Flüssigkeit auf die Platten zugeordnet ist.

5. Plattenabscheider nach einem der Ansprüche 1 bis 4, **dadurch gekennzeichnet, dass** das Plattenpaket (2) in einem zylindrischen Behälter (1) mit vorzugsweise konischem Boden eingebaut ist.

6. Plattenabscheider nach Anspruch 5, **dadurch gekennzeichnet, dass** in dem zylindrischen Behälter (1) jeweils zwei Plattenpakete (2a, 2b) derart angeordnet sind, dass sich im Mittelteil ein Abzugsraum (5) für geklärte Flüssigkeit ergibt.

7. Plattenabscheider nach Anspruch 6, **dadurch gekennzeichnet, dass** ein im unteren Bereich des Behälters (1) beginnendes Abzugsrohr (B) zum Abzug der geklärten Flüssigkeit aus dem Behälter (1) herausgeführt ist, während im oberen Bereich des Behälters (1) ein Zulauf (A₁, A₂) für zu klärende Flüssigkeit zu einer im Außenbereich des Plattenpakets (2) angeordneten Verteilzone vorgesehen ist.

8. Plattenabscheider nach Anspruch 6, **dadurch gekennzeichnet, dass** ein im oberen Bereich des Behälters (1) beginnendes Abzugsrohr (B) zum Abzug der geklärten Flüssigkeit aus dem Behälter (1) herausgeführt ist, während im unteren Bereich des Behälters (1) ein Zulauf (A₁, A₂) für zu klärende Flüssigkeit zu einer im Außenbereich des Plattenpakets (2) angeordneten Verteilzone vorgesehen ist.
